# EUROPÄISCHE PATENTSCHRIFT

(11) **EP 1 161 621 B1**
(45) Veröffentlichungstag und Bekanntmachung des Hinweises auf die Patenterteilung: **28.04.2004**
(21) Anmeldenummer: 00926735.2
(22) Anmeldetag: 10.03.2000
(51) Int. Cl.: F02B 23/10, F02P 15/08

(54) **DIREKTEINSPRITZENDE OTTO-BRENNKRAFTMASCHINE**
DIRECT INJECTION SPARK IGNITION ENGINE
MOTEUR THERMIQUE A ALLUMAGE COMMANDE A INJECTION DIRECTE

(30) Priorität: 12.03.1999 DE 19911023
(43) Veröffentlichungstag der Anmeldung: 12.12.2001
(73) Patentinhaber: DaimlerChrysler AG, 70567 Stuttgart (DE)
(72) Erfinder: HOFFMANN, Michael, D-71384 Weinstadt (DE); KRECKEL, Uwe, D-72669 Unterensingen (DE)
(86) Internationale Anmeldenummer: PCT/EP2000/002114
(87) Internationale Veröffentlichungsnummer: WO 2000/053906

(56) Entgegenhaltungen:
- EP-A- 0 835 994
- DE-A- 19 546 945
- GB-A- 2 112 859
- US-A- 5 211 145
- PATENT ABSTRACTS OF JAPAN vol. 1997, no. 01, 31. Januar 1997 (1997-01-31) & JP 08 246878 A (TOYOTA MOTOR CORP), 24. September 1996 (1996-09-24)
- PATENT ABSTRACTS OF JAPAN vol. 009, no. 029 (M-356), 7. Februar 1985 (1985-02-07) & JP 59 173566 A (TOYOTA JIDOSHA KK), 1. Oktober 1984 (1984-10-01)
- PATENT ABSTRACTS OF JAPAN vol. 010, no. 187 (M-493), 2. Juli 1986 (1986-07-02) & JP 61 031669 A (NGK SPARK PLUG CO LTD), 14. Februar 1986 (1986-02-14)

## Beschreibung

Die Erfindung betrifft eine direkteinspritzende Otto-Brennkraftmaschine der im Oberbegriff des Patentanspruchs 1 angegebenen Gattung.

Bei direkteinspritzenden Otto-Brennkraftmaschinen ist ein Brennraum in jedem Zylinder von einem längsbeweglichen Kolben und der Innenwand eines Zylinderkopfes begrenzt, wobei ein Injektor Kraftstoff zur inneren Gemischbildung mit separat zugeführter Verbrennungsluft in den Brennraum einspritzt. Die Zusammensetzung des Kraftstoff/Luft-Gemisches muß innerhalb des zündfähigen Fensters liegen, um mittels eines Zündfunkens zündbar zu sein, welcher zwischen den Elektroden einer Zündkerze auslösbar ist.

Aus der DE 195 46 945 A1 ist eine direkteinspritzende Brennkraftmaschine bekannt, deren Injektoren mit ihren Einspritzdüsen den Kraftstoff kegelförmig in den Brennraum einspritzen, wobei die Zündkerze derart angeordnet ist, daß ihre Elektroden außerhalb der Mantelfläche des von der Einspritzdüse erzeugten Kraftstoffkegels liegen. Auf diese Weise wird eine Benetzung der Elektroden mit Kraftstoff beim Einspritzvorgang vermieden und der Rußablagerung auf den Elektroden aufgrund unvollständig verbrannten Kraftstoffes entgegengewirkt. Die Elektroden sind über einen langen Betriebszeitraum von Verkokungen frei, wodurch ein ordnungsgemäßes Arbeiten der Brennkraftmaschine ohne Zündaussetzer gewährleistet sein soll. Um zündfähiges Gemisch zwischen die außerhalb des Kraftstoffkegels angeordneten Elektroden zu bringen, ist die Zündkerze derart angeordnet, daß die Masseelektrode mit einem geringen Abstand zur Mantelfläche des Kraftstoffkegels liegt und die Innenwand des Zylinderkopfes parallel zur Mantelfläche des Kraftstoffkegels verläuft unter Ausbildung eines Zwischenraumes zumindest an derjenigen Stelle, an der die Elektroden der Zündkerze angeordnet sind.

In dem Zwischenraum soll sich eine Wirbelströmung ergeben, welche aus Kraftstoff/Luft-Gemisch besteht und in den Bereich der Elektroden reicht. Um die Wirbelströmung zu generieren, ist eine besondere Formgebung der Innenwand und eine injektornahe Anordnung der Zündkerze erforderlich. Der Injektor ist in einer Einsenkung der Innenwand angeordnet, also vom freien Brennraumvolumen zurückgesetzt, wodurch der Gemischwirbel in dem der Einspritzdüse benachbarten Bereich entstehen und in dem Hohlraum zirkulieren soll, welcher zwischen der Mantelfläche des Kraftstoffkegels und der Innenwand des Zylinderkopfes im Bereich der Einspritzdüse gebildet ist. Des weiteren soll durch den Luftspalt zwischen dem Kraftstoffkegel und der parallelen, ebenso kegelförmigen Innenwand des Zylinderkopfes Luft zurückströmen, die von dem in den Brennraum eingespritzten Kraftstoff verdrängt wurde. Während der Rückströmung zur Zündkerze entlang der Innenwand sollen weitere Kraftstoffteilchen aus dem Kraftstoffkegel mitgerissen werden. Die Wirbelströmung ist im injektornahen Bereich genügend stark ausgebildet, um zündfähiges Gemisch zwischen die Elektroden einer Zündkerze zu bringen. Die Zündkerze muß demnach nahe dem Injektor angeordnet sein.

Bei der bekannten direkteinspritzenden Otto-Brennkraftmaschine muß die Brennraumbegrenzung insbesondere durch die Innenwand des Zylinderkopfes mit hohem Aufwand präzise gestaltet werden, um die gewünschten strömungstechnischen Effekte zur Bildung der zündfähigen Gemischwirbel zu erreichen. Die bekannte Brennraumkonfiguration mit der zur Gemischwirbelbildung erforderlichen Brennraumform und der zwangsläufig injektornah angeordneten Zündkerze kann oftmals einen optimalen Verbrennungsvorgang nicht erreichen und das gewünschte Betriebsverhalten der Brennkraftmaschine gewährleisten.

Die EP 835 994 A2 offenbart eine Brennkraftmaschine zur Durchführung eines wandgeführten Brennverfahrens mit einem dachförmigen Brennraum und einem mittig angeordneten Injektor, bei dem der Kraftstoff in Form eines Hohlkegels auf den Kolben eingespritzt wird. Bei diesem Verfahren wird der Kraftstoffstrahl direkt auf die Kolbenmulde gerichtet, und von dort zurück in den Brennraum verteilt. Der dabei zerstäubte Kraftstoff wird durch die Aufwärtsbewegung des Kolbens sowie eine Tumbfeströmung zu den Elektroden der Zündkerze transportiert.

Der vorliegenden Erfindung liegt die Aufgabe zugrunde, die direkteinspritzende Otto-Brennkraftmaschine der gattungsgemäßen Art derart auszubilden, daß die Brennkraftmaschine mit optimalem Betriebsverhalten arbeitet.

Diese Aufgabe wird erfindungsgemäß mit den Merkmalen des Anspruchs 1 gelöst.

Bei der erfindungsgemäßen Brennraumkonfiguration wird der Kraftstoffkegel in einem von der Brennraumbegrenzung nahezu unbeeinflußten Freistrahl eingespritzt, d.h. der Kraftstoffkegel wird in einem derartig großen Abstand, insbesondere von der Innenwand des Zylinderkopfes eingespritzt, daß sich der kegelförmige Kraftstoffstrahl weitgehend ohne strömungsmechanische Wandeffekte der Brennraumbegrenzung im freien Brennraumvolumen ausbreitet. Dabei bilden sich bei der Einspritzung aus der Mantelfläche des Kegels hervortretende Kraftstoffwirbel, welche zunächst hauptsächlich aus Kraftstoffdampf bestehen und sich mit der umliegenden Verbrennungsluft im Brennraum vermischen. Die Kraftstoffwirbel bilden sich besonders deutlich aus, wenn der Öffnungswinkel des Kraftstoffkegels zwischen 70° und 100° beträgt und werden durch eine Luftströmung erzeugt, welche im Bereich der Mantelfläche des Kraftstoffkegels aufgrund vom Kraftstoffstrahl mitgerissener Luft entsteht, wobei in entgegengesetzter Richtung durch den entstehenden Unterdruck ebenfalls eine Luftströmung erzeugt wird. Die Zündkerze wird erfindungsgemäß derart positioniert, daß die Elektroden in den Kraftstoffwirbel des Freistrahls einragen. Vorzugsweise ist die Funkenlage der Elektroden 1 mm bis 15 mm von der Mantelfläche des Kraftstoffkegels entfernt.

Der Kraftstoffwirbel, welcher zündfähiges Gemisch zwischen die Elektroden bringt, bildet sich an der Mantelfläche des Freistrahls ohne wirksamen Einfluß von der Brennraumbegrenzung aus, so daß die Brennraumform frei gestaltbar ist. Es liegt ein sogenanntes strahlgeführtes Brennverfahren vor, bei dem Wandeffekte der Innenwand des Zylinderkopfes oder etwa einer Kolbenmulde kaum Einfluß auf die Gemischbildung und die Zündung ausüben. Insbesondere im Schichtladungsbetrieb der Brennkraftmaschine, wenn mit Kraftstoffeinspritzung während des Kompressionshubes gearbeitet wird und bei luftgefülltem Brennraum eine zentrale Kraftstoffwolke gebildet wird, kann so mit einer einfachen Brennraumgestaltung ein optimales Durchbrennen der Brennraumladung erreicht werden. Ein weiterer Vorteil der erfindungsgemäßen Gemischbildung ist darin zu sehen, daß die Zündkerze weiter als bisher vom Injektor entfernt angeordnet sein kann. Der Kraftstoffwirbel liegt lange stabil an derselben Stelle im Brennraum, wodurch die Zündung in einem weiten Zeitintervall unabhängig vom Einspritzpunkt erfolgen kann.

Der Kraftstoff-Freistrahl wird vorzugsweise hohlkegelförmig in den Brennraum eingespritzt. Hierdurch bilden sich die Kraftstoffwirbel in einer besonders zum Gemischtransport zur Zündkerze geeigneten Form aus, insbesondere bei einer Einspritzung bei hohem Zylinderdruck in der Kompressionsphase während des Schichtladungsbetriebes. Besonders einfach ist der Kraftstoffkegel mit Hohlkegelform ausbildbar, wenn der Injektor eine nach außen öffnende Einspritzdüse aufweist.

Die Kraftstoffwirbel treten in Abhängigkeit von Last- und Drehzahl der Brennkraftmaschine in unterschiedlichen Zonen der Mantelfläche aus dem Kraftstoffkegel hervor. Um bei der Zündung eine möglichst optimale Funkenlage in dem Kraftstoffwirbel zu erhalten und so die Zündung und das Durchbrennen des Gemisches im Brennraum zu verbessern, sind mindestens zwei Elektroden in unterschiedlichen Funkenlagen relativ zur Mantelfläche des Kraftstoffkegels vorgesehen, an die das positive Potential der Zündspannung anlegbar ist. Entsprechend der vorliegenden Betriebslast und/oder der Drehzahl der Brennkraftmaschine wird der Zündfunke zwischen der relativ zum Kraftstoffwirbel optimal liegenden Elektrode mit positivem Potential und der zugehörigen Masseelektrode ausgelöst.

Zur Gewährleistung der theoretisch optimalen Verbrennung des Kraftstoff/Luft-Gemisches wäre eine stufenlose Nachführung der Funkenlage relativ zu dem Randwirbel als Funktion von Last und Drehzahl erforderlich. Mit mehreren Elektroden, an die das positive Potential der Zündspannung anlegbar ist, kann der theoretisch optimalen Zündung der Randwirbel nahegekommen werden, wenn die Elektroden in unterschiedlichen Funkenlagen relativ zur Mantelfläche des Kraftstoffkegels angeordnet sind. Bei Anordnung zweier Elektroden, an die das positive Potential anlegbar ist, sollten die Elektroden derart angeordnet werden, daß mit den entsprechenden Funkenlagen die mögliche Mantelzone, in der Kraftstoffwirbel hervortreten, vollständig erfaßt wird.

Zweckmäßig sind die Elektroden mit positivem Potential in unterschiedlichen Eindringtiefen in dem Brennraum angeordnet. Zur sicheren Erfassung der Kraftstoffwirbel in unterschiedlichen Last- und Drehzahlbereichen durch Zündung in optimaler Funkenlage kann eine Anordnung der Elekroden mit positivem Potential in unterschiedlichem Abstand zu einer Zylindermittelachse vorteilhaft sein. Zweckmäßig ist auch ein Unterschied der Elektroden mit positivem Potential bezüglich der Ausrichtungen ihrer Längsachsen gegenüber der Zylindermittelachse.

Mittels einer Steuereinheit wird die Zündspannung in Abhängigkeit der Betriebsart (Schichtladungsbetrieb/homogene Gemischbildung) der Brennkraftmaschine und der Betriebsbedingungen zwischen einer der Elektroden für das positive Potential und der jeweils zugeordneten Masseelektroden wahlweise angelegt. Dabei erfolgt die Zündung jeweils durch die Elektrode, die in optimaler Funkenlage zu dem vorliegenden Kraftstoffwirbel liegt. Es kann jedoch auch vorteilhaft sein, eine zweite Nachzündung (Doppelzündung) durch die weitere Elektrode vorzusehen, um das Durchbrennen der Ladung zu unterstützen. Dabei kann auch eine gleichzeitige Zündung in mehreren Funkenlagen vorteilhaft sein.

In vorteilhafter Ausbildung der Erfindung sind zwei Zündkerzen in unterschiedlichen Lagen relativ zum Kraftstoffstrahl vorgesehen, die jeweils eine Masseelektrode und eine Elektrode mit positivem Potential aufweisen. Das positive Potential der Zündspannung wird dabei an die zentrale Mittelelektrode angelegt. Die wahlweise Zündung in unterschiedlichen Funkenlagen in Abhängigkeit von Last und Drehzahl kann auch durch eine einzelne Zündkerze gegeben sein, die Elektroden unterschiedlicher axialer Länge aufweist, an die das positive Potential der Zündspannung anlegbar ist.

Ein Ausführungsbeispiel der Erfindung ist nachstehend anhand der Zeichnung näher erläutert. Es zeigen:
- Fig. 1: einen Längsschnitt einer Otto-Brennkraftmaschine,
- Fig. 2: eine Ansicht einer Zündkerze mit zwei Funkenlagen,
- Fig. 3: eine Ansicht einer weiteren Zündkerze mit zwei Funkenlagen.

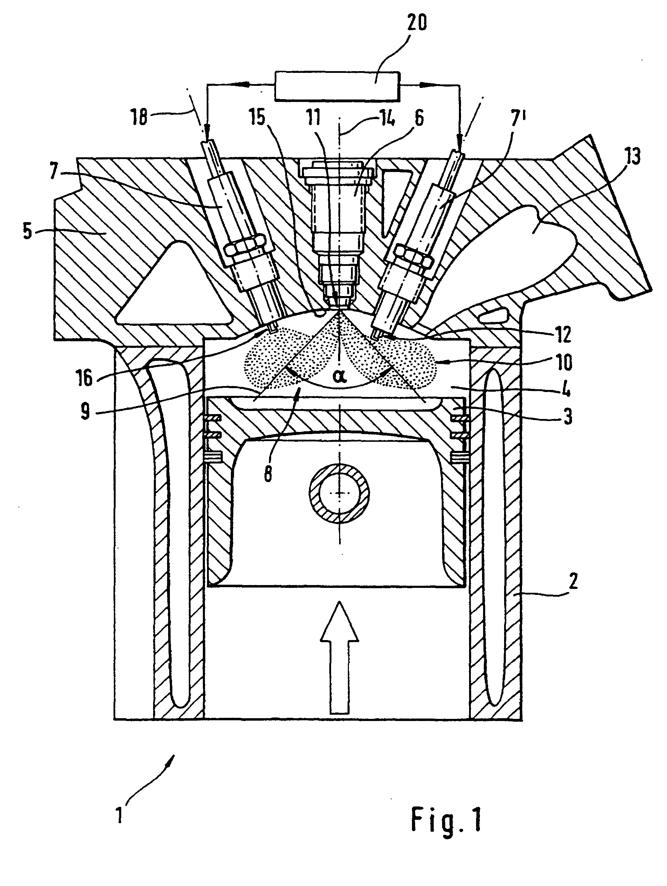

Fig. 1 zeigt eine direkteinspritzende Otto-Brennkraftmaschine 1, in deren Zylinder 2 ein Kolben 3 längsbeweglich angeordnet ist und mit der Innenwand 15 eines auf den Zylinder 2 aufgesetzten Zylinderkopfes 5 einen Brennraum 4 begrenzt. Im Zylinderkopf 5 ist ein Kraftstoffinjektor 6 angeordnet, welcher zentral auf der Zylindermittelachse 14 liegend Kraftstoff auf den Kolben 3 gerichtet direkt in den Brennraum 4 einspritzt. Die zur inneren Gemischbildung erforderliche Verbrennungsluft wird durch einen Einlaßkanal 13 dem Brennraum 4 zugeführt. Im Zylinderkopf 5 sind zwei Zündkerzen 7, 7' angeordnet, deren Elektroden 12, 16 in den Brennraum 4 einragen, wobei zum Zündzeitpunkt ein Zündfunke zwischen den Elektroden 12, 16 ausgelöst wird, welcher beim Überspringen zündfähiges Gemisch im Brennraum 4 durchschlägt. Eine Steuereinheit 20 bestimmt in Abhängigkeit von Last und Drehzahl der Brennkraftmaschine 1, welche der Zündkerzen 7, 7' einen Zündfunken ausbilden soll und legt das positive Potential der Zündspannung an die Mittelelektrode 16 der ausgewählten Zündkerze 7, 7' an. Bedarfsweise können auch beide Zündkerzen 7, 7' zur Zündung eingesetzt werden.

Der Injektor 6 weist eine nach außen öffnende Einspritzdüse 11 auf, welche einen sich zum Kolben erweiternden, hohlkegelförmigen Kraftstoffstrahl erzeugt. Die Elektroden 12, 16 der Zündkerze 7 liegen außerhalb der Mantelfläche 9 des von der Einspritzdüse 11 erzeugten Kraftstoffkegels 8 und werden so beim Einspritzvorgang nicht mit Kraftstoff benetzt.

Der Injektor wird im vorliegenden Ausführungsbeispiel piezoelektrisch betätigt, wobei die Einspritzdüse 11 von einem Piezoelement schnell und präzise einstellbar freigegeben und geschlossen wird. Es können auch andere Injektorbetätigungen zweckmäßig sein. Durch die entsprechende Wahl der Einspritzzeit und deren präzise Einhaltung während des Arbeitsspiels mittels der piezoelektrischen Betätigung des Injektors wird die Ausbildung der gewünschten Freistrahlform des Kraftstoffkegels gefördert.

Die Brennkraftmaschine arbeitet in weiten Kennfeldbereichen im Schichtladungsbetrieb, wobei der Kraftstoff während des Kompressionstaktes des Zylinders 2 eingespritzt wird. Aufgrund der späten Kraftstoffeinspritzung während des Arbeitsspiels entsteht eine geschichtete Brennraumladung mit örtlich unterschiedlichen Kraftstoffkonzentrationen, wobei sich außerhalb des Kraftstoffkegels 8 sehr mageres Gemisch bildet bzw. reine Luft befindet.

Um zündfähiges Gemisch zwischen die Elektroden 12, 16 der Zündkerzen 7,7' zu bringen, weist die Brennkraftmaschine eine derartige Brennraumkonfiguration auf, daß der Kraftstoffkegel 8 in einem von der Brennraumbegrenzung durch die Zylinderkopf-Innenwand 15 weitgehend unbeeinflußten Freistrahl eingespritzt wird. Die Mantelfläche 9 des Kraftstoffkegels 8 kann weit von der Innenwand 15 entfernt liegen, wobei sich an dem vom Wandeinfluß der Brennraumbegrenzung entkoppelten Freistrahl Kraftstoffwirbel 10 bilden, welche aus der Mantelfläche 9 herausragen. Der Öffnungswinkel α des Kraftstoffkegels 8 beträgt zwischen 70° und 100°, wobei sich die Kraftstoffwirbel 10 am Kegelrand besonders ausgeprägt ergeben.

Die Kraftstoffwirbel 10 entstehen aufgrund einer Luftströmung im Bereich der Mantelfläche 9 des Kraftstoffkegels durch vom Kraftstoffstrahl mitgerissene Luft, wobei dieser Strömung entgegengesetzt durch den entstehenden Unterdruck ebenfalls eine Luftströmung erzeugt wird. Die Kraftstoffwirbel 10 transportieren Kraftstoff in weit außerhalb des Kraftstoffkegels 8 liegende Brennraumbereiche und vermischen sich dort mit der Verbrennungsluft.

Die Zündkerzen 7, 7' sind derart angeordnet, daß ihre Elektroden 12, 16 in den Gemischwirbel 10 einragen. Auch im außerhalb des Kraftstoffkegels 8 liegenden Brennraumbereich, in dem sich die Elektroden 12 vor direkter Kraftstoffbenetzung geschützt befinden, kann so mit den bei Freistrahleinspritzung vorliegenden Kraftstoffwirbeln 10 zündfähiges Gemisch an den Zündkerzen 7, 7' bereitgestellt werden.

Die Kraftstoffwirbel 10 bilden sich nahezu unabhängig von der Brennraumform aus und die Innenwand 15 des Zylinderkopfes 5 kann daher beliebig gestaltet werden. Der Einspritzfreistrahl ist hohlkegelförmig, wodurch ein hoher Anteil der gesamten Kraftstoff-Einspritzmenge in der Mantelfläche 9 des Kegelstrahls 8 geführt wird und so von den Kraftstoffwirbeln 10 erfaßbar ist. Der Zündzeitpunkt kann in einem weiten Bereich im wesentlichen unabhängig vom Einspritzzeitpunkt variiert und bedarfsweise eingestellt werden, da die Kraftstoffwirbel über einen längeren Zeitraum stabil im Brennraum ausgeprägt werden und etwa 50 Grad KW nach dem Einspritzende noch Kraftstoff zumindest an einer der Zündkerzen 7, 7' vorliegt.

Die Kraftstoffwirbel 10 bilden sich in Abhängigkeit von Last und Drehzahl der Brennkraftmaschine 1 an unterschiedlichen Stellen der Mantelfläche 9 des Kraftstoffkegels 8 aus. Um in jedem Betriebspunkt der Brennkraftmaschine 1 eine optimale Zündung und Verbrennung des Gemisches zu gewährleisten, sind die Zündkerzen 7, 7' in unterschiedlichen Funkenlagen bezüglich der Mantelfläche 9 des Kraftstoffkegels 8 angeordnet. Die Zündkerzen 7, 7' ragen in Richtung ihrer Längsachsen 18 unterschiedlich weit in den Brennraum 4 ein, wodurch ihre jeweiligen Mittelelektroden 16, an die das positive Potential der Zündspannung anlegbar ist, in unterschiedlichen Abständen zur Mantelfläche 9 liegen. In Abhängigkeit von dem Betriebspunkt wird die Zündspannung von der Steuereinheit 20 an die Zündkerze 7,7' angelegt, deren Funkenlage mit der entsprechenden Eindringtiefe in den Brennraum 4 dort liegt, wo im jeweiligen Betriebspunkt die Kraftstoffwirbel 10 auftreten.

Die Funkenlagen der beiden für die Zündung zur Verfügung stehenden Zündkerzen 7, 7' unterscheiden sich auch über den Abstand zur Zylinderlängsachse 14, wobei die Funkenlagen durch Anordnung der Zündkerzen 7, 7' unter Berücksichtigung der Brennraumkonfiguration, beispielsweise der Brennraumgeometrie mit der Lage der hervortretenden Kraftstoffwirbel 10 im Kennfeld der Brennkraftmaschine abgestimmt wird. Die Zündkerzen 7, 7' sind derartig angeordnet, daß die gesamte Kegelmantelzone zwischen den beiden Extremlagen, in denen Kraftstoffwirbel auftreten, durch eine der beiden Zündkerzen bei der Zündung sicher erfaßbar ist. Die Funkenlagen müssen dabei nicht in den Extrempunkten liegen. Eine weitere Abstimmungsmöglichkeit der Funkenlagen mit dem Auftreten der Kraftstoffwirbel im Kennfeld der Brennkraftmaschine ist durch entsprechende Anordnung der Zündkerzen 7' mit unterschiedlichen Ausrichtungen ihrer Längsachsen 18 gegenüber der Zylindermittelachse 14 möglich.

Grundsätzlich können die beiden Zündkerzen 7, 7' baugleich sein und sich bezüglich der Funkenlage unterscheiden, welche durch die Lage der Mittelelektrode 16, an die das positive Potential der Zündspannung anlegbar ist, und die Masseelektrode 12 gegeben ist. Es ist jedoch auch möglich, zur Abstimmung der unterschiedlichen Funkenlagen mit dem Auftreten der Kraftstoffwirbel in dem möglichen Mantelzonenbereich Zündkerzen mit unterschiedlichen Funkenstrecken einzusetzen. Dabei ist der Abstand zwischen der Mittelelektrode für positives Potential der Zündspannung und der Masseelektrode unterschiedlich. Damit können mögliche geometrische Nachteile der Anordnung einer Zündkerze 7, 7' unter Berücksichtigung der angestrebten Brennraumgeometrie kompensiert werden, falls aus konstruktiven Gründen, beispielsweise der Anordnung der Gaswechselventile, die für optimale Randwirbelzündung vorgesehene Lage der Zündkerze nicht verfügbar ist.

Die Steuereinheit 20 wählt in Abhängigkeit von eingegebenen Meßwerten über die Betriebslast und die Drehzahl der Brennkraftmaschine 1 die Zündkerze 7, 7' aus, deren Elektroden 12, 16 innerhalb des in dem vorliegenden Betriebspunkt auftretenden Kraftstoffwirbels 10 liegt. Dabei wird auch die Betriebsart der Brennkraftmaschine berücksichtigt und die damit verbundenen Eigenarten der Gemischbildung (Schichtladungsbetrieb/homogene Gemischbildung). In bestimmten Betriebspunkten der Brennkraftmaschine kann eine Doppelzündung durch aneinandergereihte Zündung beider Zündkerzen 7, 7' vorteilhaft sein, um eine sichere Zündung der Kraftstoffwirbel 10 zu unterstützen. Gegebenenfalls erfolgt die Doppelzündung gleichzeitig.

Aufgrund der Stabilität der Kraftstoffwirbel 10 und des zur Zündung bereitstehenden langen Zeitraumes kann die Zündkerze 7 relativ weit vom Injektor 6 entfernt im Zylinderkopf angeordnet werden, wodurch sich die Brennraumkonfiguration und die konstruktive Gestaltung des Zylinderkopfes 5 wesentlich vereinfacht. Der Abstand der Funkenlage entsprechend der Anordnung der Elektroden 12 zur Einspritzdüse kann zwischen 7 mm und 30 mm betragen. Die Funkenlage ist dabei zwischen 1 mm bis 15 mm von der Mantelfläche 9 des Kraftstoffkegels 8 entfernt. Die Distanz der Elektroden 12 zum Kraftstoffkegel 8 wird entsprechend dem gewünschten Betriebsverhalten im jeweiligen Einsatzfall der direkteinspritzenden Otto-Brennkraftmaschine 1 gewählt.

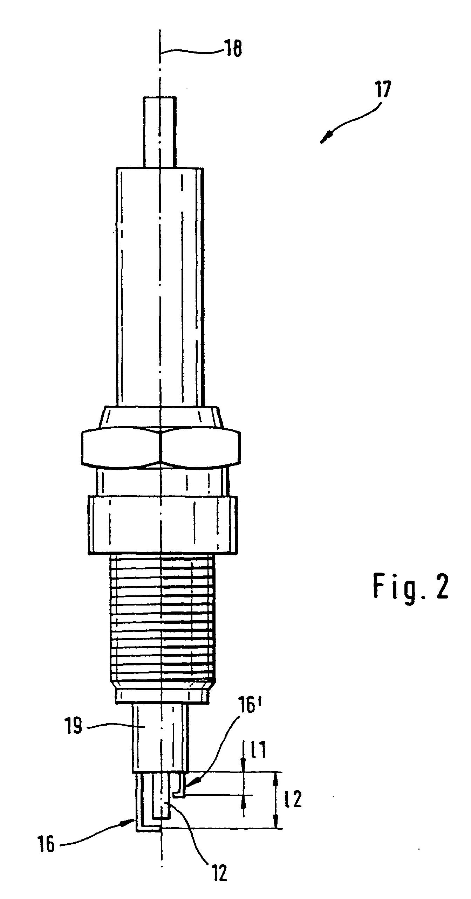

Fig. 2 zeigt eine Zündkerze 17, welche zur alternativen Ausbildung von Zündfunken in unterschiedlichen Funkenlagen relativ zur Mantelfläche des in den Brennraum eingespritzten Kraftstoffkegels zwei Elektroden 16, 16' aufweist, an die von der Steuereinheit das positive Potential der Zündspannung anlegbar ist. Beiden Elektroden 16, 16' ist gemeinsam eine zentrale Masseelektrode 12 zugeordnet, auf die bei Anlegen der Überschlagsspannung zwischen der vorgesehenen Elektrode 16, 16' für das positive Potential und der Masseelektrode 12 ein Zündfunke überspringt. Die beiden für das positive Potential der Zündspannung auswählbaren Elektroden 16, 16' liegen mit Abstand zu der Längsachse 18 der Zündkerze um die Masseelektrode 12 gruppiert und unterscheiden sich bezüglich ihrer Erstreckung in Richtung der Längsachse 18 ausgehend von einem Isolator 19 im Endbereich der Zündkerze 17. Der Isolator 19, der die Elektroden 16, 16' und die Masseelektrode 12 umgibt, verhindert ein unerwünschtes Überspringen des Zündfunkens abseits der vorgesehenen Funkenlage.

Die Länge 12 der einen Elektrode 16 ist größer als die axiale Länge 11 der zweiten Elektrode 16'. In der Einbaulage der Zündkerze 17 im Zylinderkopf der Brennkraftmaschine ragen die Elektroden 12, 16, 16' in den Brennraum ein, wobei aufgrund der unterschiedlichen Axiallängen 11, 12 Zündfunken in unterschiedlichen Abständen zum Kraftstoffkegel ausbildbar sind. Von der Steuereinheit wird abhängig von der vorliegenden Betriebslast und der Drehzahl der Brennkraftmaschine und der Betriebsart der Brennkraftmaschinen der Zündfunke in der für den Betriebspunkt optimalen Funkenlage ausgelöst.

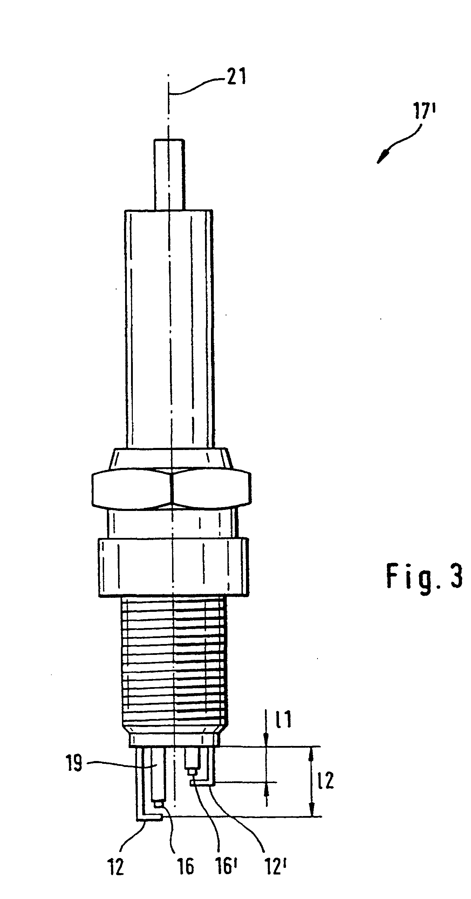

Fig. 3 zeigt eine Zündkerze 17' mit zwei Elektroden 16, 16', an die das positive Potential der Zündspannung anlegbar ist. Jeder der Elektroden 16, 16' ist eine Masseelektrode 12, 12' zugeordnet, auf die beim Anlegen der Zündspannung an die ausgewählte Elektrode 16, 16' der Zündfunke überspringt. Die Elektroden für das positive Potential der Zündspannung und die jeweils zugeordneten Masseelektroden 12, 12' unterscheiden sich durch ihre axialen Längen L1, L2, wobei durch Ansteuerung der positiven Elektrode 16 mit der größeren Länge L2 als die andere Elektrode 16' mit der geringeren axialen Erstreckung L1 ein tiefer im Brennraum liegender Zündfunke auslösbar ist. Die Elektroden 16, 16' für das positive Potential liegen bei dieser Ausgestaltung einer Zündkerze für zwei Funkenlagen benachbart einer Mittelachse 21 der Zündkerze. Die Masseelektroden liegen bezüglich der Mittelachse 21 jenseits der jeweils zugeordneten positiven Elektroden 16, 16'. Die positiven Elektroden sind jeweils in einem Isolator 19 aufgenommen, um das Überspringen des Zündfunkens von der jeweiligen Elektrodenspitze auf die vorgesehene Masseelektrode 12, 12' sicherzustellen.

## Patentansprüche

1. Verfahren zum Betrieb einer direkteinspritzenden Otto-Brennkraftmaschine, welche einen Brennraum (4), der in jedem Zylinder (2) von einem längsbeweglichen Kolben (3) und der Innenwand (15) eines Zylinderkopfes (5) begrenzt ist, und einen Injektor (6) mit einer Einspritzdüse (11) aufweist, bei dem
- dem Brennraum (4) Verbrennungsluft separat zugeführt wird,
- zur Bildung eines zündfähigen Kraftstoff/Luft-Gemisches Kraftstoff mittels der Einspritzdüse (11) in den Brennraum (4) eingespritzt wird,
- wobei mindestens eine Zündkerze (7) außerhalb einer Mantelfläche (9) des von der Einspritzdüse (11) erzeugten Kraftstoffkegels (8) angeordnet ist, wobei
- der Kraftstoff in einem Schichtladungsbetrieb der Brennkraftmaschine während des Kompressionshubes hohlkegelförmig mit einem Öffnungswinkel (α) zwischen 70° und 100° in den Brennraum eingespritzt wird,
**dadurch gekennzeichnet, dass**
- ein strahlgeführtes Brennverfahren vorgenommen wird, bei dem
- bei luftgefülltem Brennraum (4) eine zentrale Kraftstoffwolke gebildet wird, wobei
- aus der Mantelfläche (9) des eingespritzten Kraftstoffstrahls Kraftstoffwirbel (10) hervortreten, welche sich unabhängig von einer Kolbenmulde im Brennraum derart konzentrieren, dass die Elektroden der Zündkerze (7) in die Kraftstoffwirbel (10) einragen, und
- die gebildeten Kraftstoffwirbel im Brennraum an derselben Stelle bleiben, bis das gebildete Kraftstoff/Luft-Gemisch mittels der Zündkerze (7) gezündet wird.

2. Verfahren nach Anspruch 1, **dadurch gekennzeichnet, dass** bei der Zündkerze (7) mindestens zwei Elektroden (16, 16') in unterschiedlichen Funkenlagen relativ zur Mantelfläche (9) des Kraftstoffkegels (8) vorgesehen sind, an die ein positives Potential einer Zündspannung angelegt wird.

3. Verfahren nach Anspruch 1, **dadurch gekennzeichnet, dass** im Zylinderkopf zwei Zündkerzen (7, 7') derart angeordnet sind, dass deren Elektroden (12, 16) in unterschiedlichen Funkenlagen relativ zur Mantelfläche (9) des Kraftstoffkegels (8) vorgesehen sind und in die Kraftstoffwirbel (10) einragen, wobei lastabhängig die Zündung des gebildeten Kraftstoff/Luft-Gemischs mittels einer der beiden Zündkerzen oder mittels der beiden Zündkerzen durch aneinandergereihte oder gleichzeitige Doppelzündung vorgenommen wird.

4. Direkteinspritzende Otto-Brennkraftmaschine, mit einem Brennraum (4), der in jedem Zylinder (2) von einem längsbeweglichen Kolben (3) und der Innenwand (15) eines Zylinderkopfes (5) begrenzt ist, mit einem Injektor (6), dessen Einspritzdüse (11) Kraftstoff kegelförmig in den Brennraum (4) einspritzt zur Bildung eines zündfähigen Kraftstoff/Luft-Gemisches mit separat zugeführter Verbrennungsluft, wobei das Gemisch von einer Zündkerze (7) zu zünden ist, deren Elektroden (12, 16, 16') außerhalb der Mantelfläche (9) des von der Einspritzdüse (11) erzeugten hohlkegelförmigen Kraftstoffkegels (8) liegen, dessen Öffnungswinkel (α) zwischen 70° und 100° beträgt, **gekennzeichnet durch** eine derartige Anordnung der Zündkerze im Brennraum, dass zur Durchführung eines strahlgeführten Brennverfahrens die Elektroden (12, 16, 16') der Zündkerze (7) in einen aus der Mantelfläche (9) hervortretenden Kraftstoffwirbel (10) einragen, der unabhängig von der Brennraumbegrenzung aus der Mantelfläche (9) des eingespritzten Kraftstoffstrahls als Randwirbel gebildet wird und an derselben Stelle im Brennraum bleibt, und wobei mindestens zwei Elektroden (16, 16') in unterschiedlichen Funkenlagen relativ zur Mantelfläche (9) des Kraftstoffkegels (8) vorgesehen sind, an die das positive Potential der Zündspannung anlegbar ist.

5. Otto-Brennkraftmaschine nach Anspruch 4, **dadurch gekennzeichnet, dass** die Elektroden (16, 16') mit positivem Potential in unterschiedlichen Eindringtiefen (I1, I2) in dem Brennraum (4) angeordnet sind.

6. Otto-Brennkraftmaschine nach Anspruch 4 oder 5, **dadurch gekennzeichnet, dass** die Elektroden (16, 16') mit positivem Potential in unterschiedlichem Abstand zu einer Zylindermittelachse (14) angeordnet sind.

7. Otto-Brennkraftmaschine nach einem der Ansprüche 4 bis 6, **dadurch gekennzeichnet, dass** die Elektroden (16, 16') mit positivem Potential mit unterschiedlichen Ausrichtungen ihrer Längsachsen (18) gegenüber der Zylindermittelachse (14) angeordnet sind.

8. Otto-Brennkraftmaschine nach einem der Ansprüche 4 bis 7, **dadurch gekennzeichnet, dass** eine Steuereinheit (20) vorgesehen ist, mittels derer die Zündstellung wahlweise in Abhängigkeit der Betriebsart und der Betriebsbedingungen der Brennkraftmaschine (1) zwischen einer der Elektroden (16, 16') für das positive Potential und einer jeweils zugeordneten Masseelektrode (12) anlegbar ist.

9. Otto-Brennkraftmaschine nach einem der Ansprüche 4 bis 8, **dadurch gekennzeichnet, dass** zwei Zündkerzen (7, 7') vorgesehen sind, die jeweils eine Masseelektrode (12) und eine Elektrode (16, 16') mit positivem Potential aufweisen.

10. Otto-Brennkraftmaschine nach Anspruch 9, **dadurch gekennzeichnet, dass** eine zentrale Mittelelektrode (16, 16') die Elektrode mit positivem Potential bildet.

11. Otto-Brennkraftmaschine nach einem der Ansprüche 4 bis 10, **gekennzeichnet durch** eine Zündkerze (17, 21) mit zwei Elektroden (16, 16') unterschiedlicher axialer Länge, an die das positive Potential der Zündspannung anlegbar ist.

12. Otto-Brennkraftmaschine nach Anspruch 11, **dadurch gekennzeichnet, dass** die Zündkerze (17) eine zentrale Masseelektrode (12) aufweist, welche beiden Elektroden (16, 16') für positives Potential zugeordnet ist.

13. Otto-Brennkraftmaschine nach Anspruch 12, **dadurch gekennzeichnet, dass** jeder Elektrode (16, 16') für das positive Potential der Zündspannung jeweils eine Masseelektrode (12, 12') mit entsprechend unterschiedlichen axialen Längen zugeordnet ist.

14. Otto-Brennkraftmaschine nach Anspruch 13, **dadurch gekennzeichnet, dass** die Elektroden (16, 16') für das positive Potential zentral benachbart einer Mittelachse (21) der Zündkerze (22) liegen und die Masseelektroden (12, 12') bezüglich der Mittelachse (21) jenseits der jeweils zugeordneten positiven Elektroden (16, 16') liegen.

15. Otto-Brennkraftmaschine nach einem der Ansprüche 4 bis 14, **dadurch gekennzeichnet, dass** die Brennkraftmaschine (1) in weiten Kennfeldbereichen mit Ladungsschichtung und Kraftstoffeinspritzung während des Kompressionstaktes betrieben wird.

## Claims

1. A process for the operation of a direct injection spark ignition engine having a combustion chamber (4), which is delimited in each cylinder (2) by a piston (3) which moves lengthways and the inner wall (15) of a cylinder head (5), and an injector (6) with an injection nozzle (11), in which
- combustion air is fed separately into the combustion chamber (4),
- fuel is injected into the combustion chamber (4) by means of the injection nozzle (11) to form an ignitable fuel/air mixture,
- at least one spark plug (7) being positioned outside the outer surface (9) of the fuel cone (8) generated by the injection nozzle (1),
- the fuel being injected into the combustion chamber during the compression stroke at an opening angle (α) of between 70° and 100° while the internal combustion engine is operating in stratified charge mode,
**characterised in that**
- the combustion process is jet-controlled,
- when the combustion chamber (4) is full of air a central cloud of fuel is formed,
- swirling flows (10) of fuel emanating from the outer surface (9) of the jet of injected fuel which concentrate in the combustion chamber independently of a piston recess in such a manner that the electrodes of the spark plug (7) project into the swirling flows of fuel (10), and
- the swirling flow of fuel thus formed remains in the same point in the combustion chamber until the fuel/air mixture formed is ignited by means of the spark plug (7).

2. A process in accordance with claim 1,
**characterised in that**
the spark plug (7) has at least two electrodes (16, 16') in different sparking positions in relation to the outer surface (9) of the fuel cone (8) to which a positive potential of an ignition voltage is applied.

3. A process in accordance with claim 1,
**characterised in that**
positioned in the cylinder head in such a manner than their electrodes (12, 16) are positioned in different sparking positions in relation to the outer surface (9) of the fuel cone (8) and project into the swirling flows (10) of fuel are two spark plugs (7, 7'), the fuel/air mixture formed being ignited dependent on load by means of one of the two spark plugs or by means of both spark plugs by consecutive or simultaneous double ignition.

4. A direct injection spark ignition engine having a combustion chamber (4) which is delimited in each cylinder (2) by a piston (3) which moves lengthways and the inner wall (15) of a cylinder head (5) and having an injector (6) with an injection nozzle (11) which injects fuel into the combustion chamber (4) in the shape of a cone in order to form an ignitable fuel/air mixture with separately supplied combustion air, the mixture being ignited by a spark plug (7) which has electrodes (12, 16, 16') positioned outside the outer surface (9) of the hollow conical fuel cone (8) generated by the injection nozzle (11) with an opening angle (α) of between 70° and 100°,
**characterised by**
an arrangement of the spark plugs in the combustion chamber in such a manner that in order to effect a jet-controlled combustion process the electrodes (12, 16, 16') of the spark plugs (7) project into a swirling flow (10) of fuel emanating from the outer surface (9) which is formed as an edge swirl from the outer surface (9) of the injected fuel jet and remains in the same position in the combustion chamber, and at least two electrodes (16, 16') being provided in different sparking positions in relation to the outer surface (9) of the fuel cone (8) to which the positive potential of the ignition voltage can be applied.

5. A spark ignition engine in accordance with claim 4,
**characterised in that**
the electrodes (16, 16') with positive potential are positioned at different penetration depths (11, 12) in the combustion chamber (4).

6. A spark ignition engine in accordance with claim 4 or 5,
**characterised in that**
the electrodes (16, 16') with positive potential are positioned at different distances from a central cylinder axis (14).

7. A spark ignition engine in accordance with one of claims 4 to 6,
**characterised in that**
the electrodes (16, 16') with positive potential are positioned with their longitudinal axes (18) in different alignments in relation to the central cylinder axis (14).

8. A spark ignition engine in accordance with one of claims 4 to 7,
**characterised in that**
a control unit (20) is provided by means of which the ignition position can be applied either to one of the electrodes (16, 16') for the positive potential or to an associated earth electrode (12) as desired dependent on the operating mode and the operating conditions of the internal combustion engine (1).

9. A spark ignition engine in accordance with one of claims 4 to 8,
**characterised in that**
two spark plugs (7, 7') are provided each of which having an earth electrode (12) and an electrode (16, 16') with positive potential.

10. A spark ignition engine in accordance with claim 9,
**characterised in that**
a central earth electrode (16, 16') is the electrode with positive potential.

11. A spark ignition engine in accordance with one of claims 4 to 10,
**characterised by**
a spark plug (17, 21) with two electrodes (16, 16') of different axial lengths to which the positive potential of the ignition voltage can be applied.

12. A spark ignition engine in accordance with claim 11,
**characterised in that**
the spark plug (17) has a central earth electrode (12) which is associated with both electrodes (16, 16') for positive potential.

13. A spark ignition engine in accordance with claim 12,
**characterised in that**
associated with each electrode (16, 16') for the positive potential of the ignition voltage is an earth electrode (12, 12') with a correspondingly different axial length.

14. A spark ignition engine in accordance with claim 13,
**characterised in that**
the electrodes (16, 16') for the positive potential are positioned centrally adjacent to a central axis (21) of the spark plug (22) and the earth electrodes (12, 12') are positioned on the far side of the relevant associated positive electrodes (16, 16') in relation to the central axis (21).

15. A spark ignition engine in accordance with one of claims 4 to 14,
**characterised in that**
the internal combustion engine (1) is operated within broad characteristic ranges with charge stratification and fuel injection during the compression stroke.

## Revendications

1. Procédé pour le fonctionnement d'un moteur thermique à allumage par étincelles et à injection directe, qui comprend une chambre de combustion (4) délimitée dans chaque cylindre (2) par un piston (3) mobile longitudinalement et par la paroi intérieure (15) d'une culasse (5), et un injecteur (6) avec une buse d'injection (11), dans lequel
- on amène séparément de l'air de combustion à la chambre de combustion,
- pour former un mélange carburant/air explosif, on injecte du carburant dans la chambre de combustion (4) au moyen de la buse d'injection (11),
- au moins une bougie (7) est agencée à l'extérieur d'une surface enveloppe (9) du cône de carburant (8) généré par la buse d'injection (11),
- le carburant est injecté en forme de cône creux avec un angle d'ouverture (α) entre 70° et 100° dans la chambre de combustion pendant la course de compression, en fonctionnement à charge étagée du moteur thermique,
**caractérisé en ce que**
- on met en oeuvre un procédé de combustion à jet guidé, dans lequel
- on forme un nuage de carburant central lorsque la chambre de combustion (4) est remplie d'air,
- des tourbillons de carburant (10) sortent hors de la surface enveloppe (9) du jet de carburant injecté, qui se concentrent dans la chambre de combustion indépendamment d'un creux de piston, de telle sorte que les électrodes de la bougie (7) pénètrent dans les tourbillons de carburant (10), et
- les tourbillons de carburant formés demeurent au même emplacement dans la chambre de combustion jusqu'à ce que le mélange carburant/air formé soit allumé au moyen de la bougie (7).

2. Procédé selon la revendication 1, **caractérisé en ce qu'**au niveau de la bougie (7) au moins deux électrodes (16, 16') sont prévues dans des positions d'amorçage différentes par rapport à la surface enveloppe (9) du cône de carburant (8), auxquelles on applique un potentiel positif d'une tension d'allumage.

3. Procédé selon la revendication 1, **caractérisé en ce que** deux bougies (7, 7') sont agencées de telle manière dans la culasse que leurs électrodes (12, 16) sont prévues dans des positions d'amorçage différentes par rapport à la surface enveloppe (9) du cône de carburant (8) et pénètrent dans les tourbillons de carburant (10), l'allumage du mélange carburant/air formé étant effectué en fonction de la charge au moyen de l'une des deux bougies ou au moyen des deux bougies par un allumage double successif ou simultané.

4. Moteur thermique à allumage par étincelles et à injection directe, comportant une chambre de combustion (4) délimitée dans chaque cylindre (2) par un piston (3) mobile longitudinalement et par la paroi intérieure (15) d'une culasse (5), et comportant un injecteur (6) dont la buse d'injection (11) injecte du carburant en forme de cône dans la chambre de combustion (4) pour former un mélange carburant/air explosif avec de l'air de combustion alimenté séparément, le mélange devant être allumé par une bougie (7) dont les électrodes (12, 16, 16') se trouvent à l'extérieur de la surface enveloppe (9) du cône de carburant (8) en forme de cône creux généré par la buse d'injection (11), dont l'angle d'ouverture (α) est compris entre 70° et 100°, **caractérisé par** un agencement de la bougie dans la chambre de combustion tel que pour mettre en oeuvre un procédé de combustion à jet guidé, les électrodes (12, 16, 16') de la bougie (7) pénètrent dans un tourbillon de carburant (10) sortant hors de la surface enveloppe (9), qui est généré sous forme de tourbillon marginal sortant de la surface enveloppe (9) du jet de carburant injecté, indépendamment de la délimitation de la chambre de combustion, et qui demeure au même emplacement dans la chambre de combustion, et au moins deux électrodes (16, 16') sont prévues dans des positions d'amorçage différentes par rapport à la surface enveloppe (9) du cône de carburant (8), auxquelles peut être appliqué le potentiel positif de la tension d'allumage.

5. Moteur thermique à allumage par étincelles selon la revendication 4,
**caractérisé en ce que** les électrodes (16, 16') à potentiel positif sont agencées à des profondeurs de pénétration différentes (11, 12) dans la chambre de combustion (4).

6. Moteur thermique à allumage par étincelles selon l'une ou l'autre des revendications 4 et 5, **caractérisé en ce que** les électrodes (16, 16') à potentiel positif sont agencées à des distances différentes par rapport à un axe médian (14) du cylindre.

7. Moteur thermique à allumage par étincelles selon l'une des revendications 4 à 6, **caractérisé en ce que** les axes longitudinaux des électrodes (16, 16') à potentiel positif sont agencés dans des orientations différentes par rapport à l'axe médian (14) du cylindre.

8. Moteur thermique à allumage par étincelles selon l'une des revendications 4 à 7, **caractérisé en ce qu'**il est prévu une unité de commande (20) au moyen de laquelle la position d'allumage est applicable au choix en fonction du type de fonctionnement et des conditions de fonctionnement du moteur thermique (1) entre l'une des électrodes (16, 16') pour le potentiel positif et une électrode de masse respective associée (12).

9. Moteur thermique à allumage par étincelles selon l'une des revendications 4 à 8, **caractérisé en ce qu'**il est prévu deux bougies (7, 7') qui comprennent chacune une électrode de masse (12) et une électrode (16, 16') à potentiel positif.

10. Moteur thermique à allumage par étincelles selon la revendication 9, **caractérisé en ce qu'**une électrode centrale (16, 16') forme l'électrode à potentiel positif.

11. Moteur thermique à allumage par étincelles selon l'une des revendications 4 à 10, **caractérisé par** une bougie (17, 21) comportant deux électrodes (16, 16') de longueurs axiales différentes, auxquelles peut être appliqué le potentiel positif de la tension d'allumage.

12. Moteur thermique à allumage par étincelles selon la revendication 11, **caractérisé en ce que** la bougie (17) comprend une électrode de masse (12) centrale qui est associée aux deux électrodes (16, 16') pour le potentiel positif.

13. Moteur thermique à allumage par étincelles selon la revendication 12, **caractérisé en ce qu'**à chaque électrode (16, 16') pour le potentiel positif de la tension d'allumage est associée une électrode de masse respective (12, 12') avec des longueurs axiales qui diffèrent en correspondance.

14. Moteur thermique à allumage par étincelles selon la revendication 13, **caractérisé en ce que** les électrodes (16, 16') pour le potentiel positif se trouvent au centre au voisinage d'un axe médian (21) de la bougie (22), et **en ce que** les électrodes de masse (12, 12') se trouvent au-delà des électrodes positives respectives associées (16, 16') par rapport à l'axe médian (21).

15. Moteur thermique à allumage par étincelles selon l'une des revendications 4 à 14, **caractérisé en ce que** le moteur thermique (1) fonctionne dans de larges plages de champ caractéristique avec étagement de charge et injection de carburant pendant le temps de compression.
